# EUROPEAN PATENT APPLICATION

(11) **EP 4 477 675 A1**
(43) Date of publication of application: **18.12.2024**
(21) Application number: 22926093.0
(22) Date of filing: 16.12.2022
(51) Int. Cl.: C08B 37/00, C08G 83/00

(54) **PRODUCTION METHOD FOR ?-1,3-GLUCAN DERIVATIVE**

(30) Priority: 10.02.2022 JP 2022019977
(71) Applicant: NITTO DENKO CORPORATION, Ibaraki-shi Osaka 567-8680 (JP)
(72) Inventor: YANO Hikaru, Ibaraki-shi, Osaka 567-8680 (JP); NAKAYAMA Junichi, Ibaraki-shi, Osaka 567-8680 (JP)
(74) Representative: Müller-Boré & Partner Patentanwälte PartG mbB
(86) International application number: PCT/JP2022/046546
(87) International publication number: WO 2023/153079

(57) **Abstract**

The present invention provides a production method for a β-1,3-glucan derivative, which is suitable for reducing a load on the environment. A production method for a β-1,3-glucan derivative according to present invention includes performing an esterification reaction of β-1,3-glucan at a temperature of 40°C to 120°C in the presence of an acid catalyst. In the production method for a β-1,3-glucan derivative, for example, the esterification reaction is performed by bringing the β-1,3-glucan into contact with acid anhydride.

## Description

### TECHNICAL FIELD

The present invention relates to a production method for a β-1,3-glucan derivative.

### BACKGROUND ART

In recent years, bioplastics in which renewable resources are utilized have been examined from the viewpoint of reducing a load on the environment. As the renewable resource, for example, polysaccharides derived from organisms and plants are known. Specific examples of such polysaccharides include β-glucan containing β-glucose (specifically, β-D-glucose) as a constituent sugar.

β-glucan is classified into β-1,4-glucan, β-1,3-glucan, and the like according to bonding positions of β-glucose. Specific examples of β-1,4-glucan include cellulose. Specific examples of β-1,3-glucan include paramylon. For example, paramylon is synthesized by photosynthesis of microalgae such as Euglena. Microalgae can be easily cultured, and furthermore, can advantageously absorb a large amount of carbon dioxide during the culturing process.

Examination for introducing substituents into β-1,3-glucan to synthesize a β-1,3-glucan derivative is performed from the viewpoint of effectively utilizing β-1,3-glucan such as paramylon. As one example, Patent Literature 1 indicates that a β-1,3-glucan derivative synthesized by an esterification reaction is utilized for adhesives and the like.

### CITATION LIST

### Patent Literature

Patent Literature 1: JP2018-154723A

### SUMMARY OF INVENTION

### Technical Problem

To date, in a case where an esterification reaction of β-1,3-glucan is performed, an excessively large amount of a basic compound such as pyridine has been used as a solvent, and acid chloride has been used as an esterifying agent (for example, Patent Literature 1). In a case where the esterification reaction is performed under such conditions, use of a large amount of an organic solvent may tend to be required in a purifying process. In general, carbon dioxide is discharged during the production of compounds used in the esterification reaction and the purifying process. In a conventional production method for a β-1,3-glucan derivative, since the number of kinds and an amount of compounds used in the esterification reaction and the purifying process are large, an amount of carbon dioxide discharged is large in the process, and a load on the environment may be large.

Therefore, the present invention provides a production method for a β-1,3-glucan derivative, which is suitable for reducing a load on the environment.

### Solution to Problem

The present invention provides a production method for a β-1,3-glucan derivative, the production method including performing an esterification reaction of β-1,3-glucan at a temperature of 40°C to 120°C in the presence of an acid catalyst.

### Advantageous Effects of Invention

The present invention can provide the production method for a β-1,3-glucan derivative, which is suitable for reducing a load on the environment.

### DESCRIPTION OF EMBODIMENTS

A production method for a β-1,3-glucan derivative according to a first aspect of the present invention includes performing an esterification reaction of β-1,3-glucan at a temperature of 40°C to 120°C in the presence of an acid catalyst.

According to a second aspect of the present invention, for example, in the production method according to the first aspect, the esterification reaction is performed by bringing the β-1,3-glucan into contact with acid anhydride.

According to a third aspect of the present invention, for example, in the production method according to the second aspect, the acid anhydride includes at least one selected from the group consisting of acetic anhydride and propionic anhydride.

According to a fourth aspect of the present invention, for example, in the production method according to any one of the first to the third aspects, a ratio of a substance amount of the acid catalyst to a total substance amount of glucose units included in the β-1,3-glucan is 0.03 to 0.30.

According to a fifth aspect of the present invention, for example, in the production method according to any one of the first to the fourth aspects, the esterification reaction is performed such that a degree of substitution (DS value) is 2.5 or more.

According to a sixth aspect of the present invention, for example, in the production method according to any one of the first to the fifth aspects, the acid catalyst includes at least one selected from the group consisting of Bronsted acid and Lewis acid.

According to a seventh aspect of the present invention, for example, in the production method according to the sixth aspect, the Bronsted acid includes sulfuric acid.

According to an eighth aspect of the present invention, for example, in the production method according to the sixth or the seventh aspect, the Lewis acid includes a metal complex having a metal element and a ligand coordinated to the metal element.

According to a ninth aspect of the present invention, for example, in the production method according to the eighth aspect, the metal element has an electronegativity of 1.25 or more.

According to a tenth aspect of the present invention, for example, in the production method according to the eighth or the ninth aspect, the metal element in 6-coordination has an ionic radius of 80 pm or less.

According to an eleventh aspect of the present invention, for example, in the production method according to any one of the eighth to the tenth aspects, the metal element includes at least one selected from the group consisting of Sc, Hf, Cu, Zn, and In.

According to a twelfth aspect of the present invention, for example, in the production method according to any one of the eighth to the eleventh aspects, an acid dissociation constant pKa of the ligand which has yet to be ionized is 0 or less.

According to a thirteenth aspect of the present invention, for example, in the production method according to any one of the eighth to the twelfth aspects, the ligand includes at least one selected from the group consisting of triflate, a bis(fluorosulfonyl)imide anion, and a bis(trifluoromethanesulfonyl)imide anion.

The present invention will be described below in detail. However, the following description is not intended to restrict the present invention to a specific embodiment.

A production method for a β-1,3-glucan derivative according to the present embodiment includes performing an esterification reaction of β-1,3-glucan at a temperature of 40°C to 120°C in the presence of an acid catalyst. Specifically, for example, the esterification reaction is performed by heating a mixed solution M including β-1,3-glucan and the acid catalyst, to 40°C to 120°C. The mixed solution M further includes an esterifying agent in general. The esterification reaction progresses by binging the β-1,3-glucan into contact with the esterifying agent in the mixed solution M. In the description herein, the "esterifying agent" represents a compound that can react with β-1,3-glucan to form an ester group.

### [β-1,3-glucan]

β-1,3-glucan is β-glucan that includes glucose units U bonded to each other through a β-1,3-glucoside bond. In the description herein, the expression that the glucose units are bonded to each other through a β-1,3-glucoside bond may be represented as "the glucose unit has a β-1,3-glucoside bond".

Specifically, the β-1,3-glucan includes a polymer P1 having the above-described glucose unit U. For example, the polymer P1 includes the glucose unit U as a main component, and, preferably, the polymer P1 is substantially constituted merely by the glucose unit U. In the description herein, the "main component" refers to a constituent unit which is included at the largest amount on a weight basis among all the constituent units of the polymer P1. The "substantially constituted merely by" means that other components that alter the intrinsic feature of the constituent unit described above are excluded, and means, for example, constituted by 95 wt% or more and more preferably 99 wt% or more of the constituent unit. However, the polymer P1 may further include a constituent unit other than the glucose unit U.

The glucose unit U includes at least one selected from the group consisting of a glucose unit U1 that does not have a glucoside bond other than the β-1,3-glucoside bond and a glucose unit U2 that has another glucoside bond in addition to the β-1,3-glucoside bond, and preferably includes the glucose unit U1. The glucose unit U1 is, for example, represented by the following formula (1).

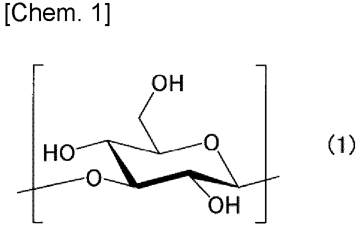

Examples of another glucoside bond included in the glucose unit U2 include a β-1,6-glucoside bond. In a case where the polymer P1 includes the glucose unit U2, the polymer P1 may have a branched structure.

The polymer P1 may include the glucose unit U1 as a main component, and may be substantially constituted merely by the glucose unit U1. However, the polymer P1 may further include the glucose unit U2 in addition to the glucose unit U1.

The β-1,3-glucan is classified into paramylon, curdlan, laminaran, schizophyllan, pachyman, lentinan, etc., according to proportions of the glucose units U1 and U2 in the polymer P1. In the present embodiment, the β-1,3-glucan is preferably paramylon. In paramylon, the polymer P1 is substantially constituted merely by the glucose unit U1, and has no branched structure. In paramylon, the three polymers P1 form a triple helix structure. As described above, paramylon is synthesized by photosynthesis of microalgae such as Euglena. As one example, by subjecting microalgae to a purifying process, paramylon can be easily isolated from the microalgae.

The weight-average molecular weight of the polymer P1 is, but is not particularly limited to, for example, 30000 to 500000.

### [Acid catalyst]

In the present embodiment, the acid catalyst means an acid that can promote the esterification reaction and does not alter its chemical structure before and after the esterification reaction. In the present embodiment, the acid catalyst includes at least one selected from the group consisting of Bronsted acid and Lewis acid, and preferably includes Lewis acid. According to another aspect, the present invention provides the production method for a β-1,3-glucan derivative, which includes performing an esterification reaction of β-1,3-glucan in the presence of an acid catalyst and in which the acid catalyst includes Lewis acid. In the description herein, the "Bronsted acid" means an acid that has a dissociable proton and can donate the proton to another compound. The "Lewis acid" means an acid that can receive an electron pair of another compound and is other than Bronsted acid.

Examples of the Bronsted acid include inorganic acids and organic acids, and an inorganic acid is preferable. Examples of the inorganic acid include sulfuric acid, hydrochloric acid, hydrobromic acid, hydroiodic acid, fluorosulfonic acid, and phosphoric acid. Examples of the organic acid include methanesulfonic acid, benzenesulfonic acid, p-toluenesulfonic acid, trifluoromethanesulfonic acid, and bis(trifluoromethanesulfonyl)imide. The Bronsted acid is preferably a strong acid, and particularly preferably includes sulfuric acid.

The Lewis acid preferably includes a metal complex having a metal element and a ligand coordinated to the metal element. In the metal complex, for example, the metal element is ionized and exists as a metal ion. In the metal complex, the valence of the metal ion is, but is not particularly limited to, for example, 2 to 4.

The electronegativity of the metal element of the metal complex is, for example, 1.25 or more and preferably 1.30 or more. In a case where the electronegativity of the metal element is high, the metal complex tends to have high catalytic activity. The upper limit value of the electronegativity of the metal element is, but is not particularly limited to, for example, 2.00, and may be 1.90, 1.80, 1.70, 1.60, or 1.50, and furthermore, may be 1.40. In the description herein, the "electronegativity" means Pauling electronegativity of a metal element (neutral metal atom) which has yet to be ionized.

The ionic radius d of the metal element included in the metal complex in 6-coordination is, for example, 80 pm or less, and may be 78 pm or less, 77 pm or less, 76 pm or less, 75 pm or less, 74 pm or less, 73 pm or less, or 72 pm or less, and furthermore, may be 71 pm or less. In a case where the ionic radius d is small, the metal complex tends to have high catalytic activity. The lower limit value of the ionic radius d is, but is not particularly limited to, for example, 50 pm and may be 60 pm. In the description herein, the "ionic radius d" represents a value based on the definition described in Shannon et al., ActaA32 (1976) 751.

In the metal complex, the metal element may be a transition metal element or a main group metal element. For example, the metal element includes at least one selected from the group consisting of Sc, Hf, Cu, Zn, and In, and preferably includes at least one selected from the group consisting of Sc, Hf, and Cu. The metal element may include Sc or may include Hf.

In the metal complex, examples of the ligand include an organic ligand and an inorganic ligand, and an organic ligand is preferable. The ligand is, for example, coordinated to the metal element in an ionized state. In the metal complex, the valence of the ligand is, but is not particularly limited to, for example, -1. The metal complex may have a plurality of ligands. In this case, the plurality of ligands may be the same or different from each other.

The ligand of the metal complex preferably has high acidity before being ionized. The acid dissociation constant pKa of the ligand which has yet to be ionized is, for example, 0 or less, may be -5 or less, and furthermore, may be -10 or less. The ligand having the acid dissociation constant pKa of 0 or less before being ionized is suitable for enhancing catalytic activity of the metal complex. The lower limit value of the acid dissociation constant pKa of the ligand which has yet to be ionized is, but is not particularly limited to, for example, -25, and may be -20. In the description herein, the "acid dissociation constant pKa" represents a value which is measured, by using a ligand which has yet to be ionized, in an aqueous solution set at 25°C. In a case where the ligands have a plurality of acid dissociation constants, the "acid dissociation constant pKa" represents a first acid dissociation constant.

The ligand of the metal complex has, for example, at least one functional group selected from the group consisting of a sulfonyl group and a sulfonylimide group. The ligand may further include a fluorine-containing group such as a fluoro group and a perfluoroalkyl group, in addition to the above-described functional group. Specific examples of the perfluoroalkyl group include a trifluoromethyl group. Examples of the ligand include: fluorosulfonate; perfluoroalkylsulfonate such as triflate (trifluoromethanesulfonate: TfO⁻); a bis(fluorosulfonyl)imide anion; and a bis(perfluoroalkylsulfonyl)imide anion such as a bis(trifluoromethanesulfonyl)imide anion. For example, the ligand includes at least one selected from the group consisting of triflate, a bis(fluorosulfonyl)imide anion, and a bis(trifluoromethanesulfonyl)imide anion, and preferably includes triflate.

Table 1 indicates specific examples of the metal complex that can be used for the esterification reaction in the present embodiment. Table 1 also indicates the electronegativity of the metal element included in the metal complex, and the like.

**[Table 1]**

| Metal complex | Metal element | | | Ligand |
|---|---|---|---|---|
| | Electronegativity | Valence of ion | Ionic radius d (pm) | Acid dissociation constant pKa before ionization |
| Sc(OTf)₃ | 1.36 | 3 | 74.5 | -12 |
| Sc(NTf)₃ | 1.36 | 3 | 74.5 | <-12 |
| Hf(OTf)₄ | 1.30 | 4 | 71.0 | -12 |
| Cu(OTf)₂ | 1.90 | 2 | 77.0 | -12 |
| Zn(OTf)₂ | 1.65 | 2 | 74.0 | -12 |
| In(OTf)₃ | 1.78 | 3 | 80.0 | -12 |

### [Esterifying agent]

In the present embodiment, the esterification reaction is performed by bringing β-1,3-glucan into contact with an esterifying agent. Thus, a hydroxyl group included in the polymer P1 of the β-1,3-glucan reacts with the esterifying agent. As one example, an acyl group derived from the esterifying agent is introduced into the polymer P1 to form an ester group.

The esterifying agent is preferably in the form of liquid at 25°C. The esterifying agent in the form of liquid can function also as a solvent for adjusting a viscosity of the above-described mixed solution M. By using the esterifying agent in the form of liquid, another compound that functions as a solvent need not be additionally used, and a load on the environment tends to be further reduced. However, the esterifying agent may be in the form of a solid at 25°C.

For example, the esterifying agent includes at least one selected from the group consisting of an acid anhydride and carboxylic acid, and preferably includes an acid anhydride. In the present embodiment, the esterification reaction is preferably performed by bringing β-1,3-glucan into contact with an acid anhydride. In the present embodiment, the esterifying agent preferably includes no acid halide such as acid chloride. In the present embodiment, use of acid chloride which is harmful and relatively highly dangerous can be avoided.

The acid anhydride as the esterifying agent is, for example, represented by the general formula R¹-COOCO-R². In this formula, R¹ and R² each independently represent a hydrogen atom or a hydrocarbon group that may have a substituent. R¹ and R² may be different from each other but are preferably the same. The number of carbon atoms in the hydrocarbon group is, but is not particularly limited to, for example, 1 to 15, preferably 5 or less, and more preferably 2 or less. The hydrocarbon group may be any of linear, branched, and cyclic ones. Examples of the hydrocarbon group include an alkyl group such as a methyl group and an ethyl group, and an aryl group such as a phenyl group. Examples of the substituent of the hydrocarbon group include, but are not particularly limited to, a halogen group such as a fluoro group.

For example, the acid anhydride includes at least one selected from the group consisting of acetic anhydride and propionic anhydride, and preferably includes acetic anhydride. In a case where the acid anhydride includes acetic anhydride, an acetyl group is introduced into β-1,3-glucan through the esterification reaction.

The carboxylic acid as the esterifying agent is, for example, represented by the general formula R³-COOH. In this formula, R³ represents a hydrogen atom or a hydrocarbon group that may have a substituent. Examples of the hydrocarbon group that may have a substituent include ones described above for the acid anhydride. Specific examples of the carboxylic acid include acetic acid and propionic acid.

As one example, in a case where the acid catalyst is Bronsted acid, the esterifying agent preferably includes both acid anhydride and carboxylic acid. In this case, a compound corresponding to hydrolysate of acid anhydride is preferably used as carboxylic acid. For example, in a case where acetic anhydride is used as the acid anhydride, acetic acid is preferably used as carboxylic acid.

In a case where the acid catalyst is Lewis acid, the esterifying agent preferably includes acid anhydride. In this case, carboxylic acid need not be additionally used as the esterifying agent. In a case where the acid catalyst is Lewis acid, an amount of the esterifying agent to be used tends to be reduced as compared with a case where the acid catalyst is Bronsted acid.

### [Other compounds]

In the present embodiment, the above-described mixed solution M may further include a compound other than the β-1,3-glucan, the acid catalyst, and the esterifying agent, but preferably includes no other compounds. As one example, the mixed solution M preferably includes no basic compound. Examples of the basic compound include amine compounds such as pyridine and triethylamine. Thus, according to the present embodiment, use of pyridine and triethylamine that have offensive odor and are relatively highly dangerous can be avoided.

Furthermore, in the present embodiment, it is preferable that the mixed solution M does not include another compound that functions as a solvent, except for the β-1,3-glucan, the acid catalyst, and the esterifying agent. In this case, an amount of an organic solvent to be used can be substantially reduced as compared with conventional art, and a load on the environment can be further reduced. However, the mixed solution M may further include another compound that functions as a solvent.

### [Esterification reaction]

In the present embodiment, for example, the esterification reaction can be performed by the following method. Firstly, the β-1,3-glucan, the acid catalyst, and the esterifying agent are mixed. At this time, another compound may be further mixed as necessary. Thus, the above-described mixed solution M is obtained. The mixed solution M can be prepared, for example, at a normal temperature under a normal pressure (25°C, 101 kPa). In the mixed solution M, almost the entirety of the β-1,3-glucan is preferably dissolved or dispersed. The order in which the compounds are mixed is not particularly limited. As one example, in a case where carboxylic acid in the form of liquid is used as the esterifying agent, the β-1,3-glucan and the carboxylic acid are firstly brought into contact with each other, and the β-1,3-glucan is preferably swollen with the carboxylic acid in advance. In a case where the β-1,3-glucan is swollen with the carboxylic acid in advance, the esterification reaction tends to efficiently progress.

In the mixed solution M, a ratio p1 of a substance amount of the acid catalyst to the total substance amount T of the glucose units included in the β-1,3-glucan (specifically, the polymer P1) is, for example, 0.30 or less, and may be 0.20 or less, 0.15 or less, 0.13 or less, 0.10 or less, and 0.07 or less, and furthermore, may be 0.05 or less. The lower limit value of the ratio p1 is, for example, 0.03. The ratio p1 is preferably 0.03 to 0.30. By adjusting the ratio p1 in this range, a side reaction described below may tend to be further inhibited while the esterification reaction of the β-1,3-glucan is caused to sufficiently progress.

In the mixed solution M, a ratio p2 of a substance amount of the esterifying agent to the total substance amount T of the glucose units is, for example, 2.0 or more, preferably 3.0 or more, and may be 4.0 or more, and furthermore, may be 5.0 or more. The upper limit value of the ratio p2 is, but is not particularly limited to, for example, 24. As one example, in a case where the esterifying agent includes the acid anhydride, a ratio p3 of a substance amount of the acid anhydride to the total substance amount T of the glucose units is, for example, 2.0 to 10 and preferably 3.0 to 8.0. In a case where the esterifying agent includes carboxylic acid, a ratio p4 of a substance amount of the carboxylic acid to the total substance amount T of the glucose units is, for example, 3.0 to 24 and preferably 5.0 to 20.

Subsequently, the esterification reaction is performed by heating the mixed solution M while stirring the mixed solution M. As described above, in the present embodiment, the temperature for the esterification reaction is 40°C to 120°C. The temperature for the esterification reaction is preferably 100°C or lower, may be 90°C or lower, or 80°C or lower, and furthermore, may be 70°C or lower. The temperature for the esterification reaction may be 50°C or higher. According to the examination performed by the inventors of the present invention, in a case where the esterification reaction of the β-1,3-glucan is performed in the presence of the acid catalyst, a side reaction in which the glucoside bonds of the polymer P are cleaved may occur. If the side reaction occurs, a low molecular weight product (low molecular weight compound) is formed as a by-product. The inventors of the present invention have further progressed the examination based on the findings, and have found that, in a case where the temperature for the esterification reaction is set to be 120°C or lower, the above-described side reaction can be sufficiently inhibited. According to the examination performed by the inventors of the present invention, in a case where the temperature for the esterification reaction is set to be 40°C or higher, the esterification reaction of the β-1,3-glucan tends to sufficiently progress.

The time for the esterification reaction is, for example, 0.5 hours or longer and may be one hour or longer. The upper limit of the time for the esterification reaction is, for example, ten hours, and may be five hours. In the present embodiment, in a case where the temperature and the time for the esterification reaction, and the above-described ratio p1 are appropriately set, the above-described side reaction tends to be further inhibited while the esterification reaction of the β-1,3-glucan is caused to sufficiently progress.

By performing the esterification reaction, a β-1,3-glucan derivative is formed in the mixed solution M. The production method of the present embodiment may further include performing a purifying process for the β-1,3-glucan derivative included in the mixed solution M. For example, the purifying process can be performed by adding water to the mixed solution M to deposit the β-1,3-glucan derivative, and filtering the obtained precipitate. When the precipitate is filtered, the precipitate may be washed with water as necessary.

In the present embodiment, the number of kinds and an amount of the compounds used for the esterification reaction tend to be smaller than those in conventional art. Furthermore, this tends to reduce the number of kinds and an amount of compounds other than the β-1,3-glucan derivative in the mixed solution M after the esterification reaction, as compared with conventional art. Particularly, in the present embodiment, since the temperature for the esterification reaction is appropriately adjusted, the above-described side reaction is sufficiently inhibited, and an amount of the by-products tends to be small. Therefore, in the present embodiment, a purifying process in which a large amount of an organic solvent is used, for example, a reprecipitation process, is not necessarily required, and, for example, a purifying process can be performed merely by using water. Thus, it can be said that the production method of the present embodiment is suitable for reducing a load on the environment.

### [β-1,3-glucan derivative]

As described above, by performing the esterification reaction of the β-1,3-glucan, a β-1,3-glucan derivative can be obtained. The β-1,3-glucan derivative includes, for example, a glucose unit S in which a part or all of hydroxyl groups included in the above-described glucose unit U have been converted to ester groups. Similarly to the glucose unit U, the glucose unit S has the β-1,3-glucoside bond. Specifically, the β-1,3-glucan derivative includes a polymer P2 having the glucose unit S. For example, the polymer P2 has the same structure as the polymer P1 except that a part or all of the hydroxyl groups included in the polymer P1 have been converted to ester groups.

The glucose unit S includes at least one selected from the group consisting of a glucose unit S1 that does not have a glucoside bond other than the β-1,3-glucoside bond, and a glucose unit S2 that has another glucoside bond in addition to the β-1,3-glucoside bond, and preferably includes the glucose unit S1. The glucose unit S1 is, for example, represented by the following formula (2).

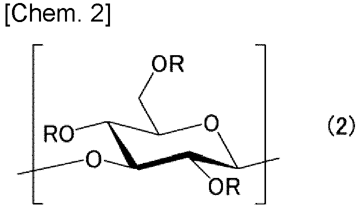

In the formula (2), Rs each independently represent a hydrogen atom (however, excluding a case where all of Rs are hydrogen atoms) or an acyl group. Rs may be the same or different from each other. The acyl group is, for example, represented by the general formula -COR⁴. In this formula, R⁴ represents a hydrogen atom or a hydrocarbon group that may have a substituent. Examples of the hydrocarbon group that may have a substituent include the hydrocarbon groups described above for the esterifying agent. Specific examples of the acyl group include an acetyl group and a propionyl group.

Similarly to the glucose unit U2, examples of another glucoside bond included in the glucose unit S2 include a β-1,6-glucoside bond. In a case where the polymer P2 includes the glucose unit S2, the polymer P2 may have a branched structure.

The polymer P2 may include the glucose unit S1 as a main component, and may be substantially constituted merely by the glucose unit S1. However, the polymer P2 may further include the glucose unit S2 in addition to the glucose unit S1.

The weight-average molecular weight of the polymer P2 is, but is not particularly limited to, for example, 30000 to 500000.

In the β-1,3-glucan derivative, it is preferable that the degree of substitution (DS value) of the acyl group introduced through the esterification reaction is, for example, 2.0 or more, may be 2.5 or more, or 2.7 or more, and furthermore, is preferably 3.0. In the present embodiment, the esterification reaction is preferably performed such that the DS value is 2.5 or more. Specifically, the DS value means the number of acyl groups introduced through the esterification reaction, for one glucose unit included in the polymer P2. In a case where the DS value is 3, it can be said that almost all the hydroxyl groups included in the polymer P1 have been converted to ester groups through the esterification reaction.

The DS value can be specified by the following method. Nuclear magnetic resonance spectroscopy (¹H-NMR) is firstly performed for the β-1,3-glucan derivative. At this time, as a measurement sample, for example, a solution in which 10 mg of the β-1,3-glucan derivative is dissolved in 0.7 mL of deuterated chloroform is used. Subsequently, from the obtained NMR spectrum, peaks that are derived from hydrogen atoms bonded to 1-position to 6-position carbon atoms of the glucose unit are specified. The integral value of each of the specified peaks is calculated, and the total value V1 thereof is determined. Furthermore, a peak that is derived from the acyl group introduced through the esterification reaction is specified from the NMR spectrum. The total value V1 is assumed to be 7.00, and the integral value (total value of the integral values) V2 of the peak derived from the acyl group at this time is calculated. A value obtained by dividing the integral value V2 by the number (3 in the case of an acetyl group) of hydrogen atoms included in one acyl group can be regarded as the DS value.

The β-1,3-glucan derivative obtained by the production method of the present embodiment can be used for various usages. As one example, the β-1,3-glucan derivative can be used for adhesives, films, etc.

### Examples

The present invention will be more specifically described below by way of examples and comparative examples. However, the present invention is not limited to these examples.

### (Comparative example 1)

Paramylon (manufactured by Euglena Co., Ltd.) as the β-1,3-glucan, acetic anhydride (manufactured by Tokyo Chemical Industry Co., Ltd.) and acetic acid (manufactured by Tokyo Chemical Industry Co., Ltd.) as the esterifying agent, and sulfuric acid (manufactured by FUJIFILM Wako Pure Chemical Corporation) as the acid catalyst (Bronsted acid) were firstly prepared, and mixed under the conditions of 25°C and 101 kPa. At this time, the total substance amount of the glucose units included in the paramylon was set as 1.0 molar equivalent, and 4.0 molar equivalents of the acetic anhydride, 12.8 molar equivalents of the acetic acid, and 0.02 molar equivalents of the sulfuric acid were used. Subsequently, the obtained mixed solution was stirred at room temperature (rt: 25°C) for five hours. The mixed solution was stirred at about 240 rpm by using a magnetic stirrer.

Subsequently, 300 molar equivalents of water was added to the mixed solution, and unreacted acid anhydride was deactivated. At this time, a precipitate was deposited from the mixed solution. Suction filtration of the obtained precipitate was performed while the precipitate was washed with an excessively large amount of water. Subsequently, the precipitate was vacuum-dried at 60°C for four hours, to obtain a solid product.

### (Comparative examples 2 and 3)

A solid product was obtained in the same method as in Comparative example 1 except that the kinds of compounds to be used, the molar equivalents of the compounds, and the reaction conditions were changed to those indicated in Table 2. In Comparative examples 2 and 3, scandium (III) triflate (manufactured by Tokyo Chemical Industry Co., Ltd.) was used as the acid catalyst (Lewis acid).

### (Reference examples 1 to 3)

A solid product was obtained in the same method as in Comparative example 1 or 3 except that cellulose or glucose was used instead of paramylon.

### (Examples 1 to 3)

A solid product was obtained in the same method as in Comparative example 3 except that the temperature (reaction temperature) at which the mixed solution was stirred was changed to the temperature indicated in Table 2.

### (Examples 4 to 11)

A solid product was obtained in the same method as in Comparative example 1 except that the molar equivalent of the acid catalyst, the temperature (reaction temperature) at which the mixed solution was stirred, and the stirring time (reaction time) were changed to those indicated in Table 3.

### (Examples 12 to 14)

A solid product was obtained in the same method as in Example 2 except that the kind of the acid catalyst, and the temperature (reaction temperature) at which the mixed solution was stirred were changed to those indicated in Table 4.

### (Comparative example 4)

A solid product was obtained in the same method as in Comparative example 2 except that propionic anhydride was used as the esterifying agent.

### (Examples 15 to 16)

A solid product was obtained in the same method as in Example 2 except that propionic anhydride was used as the esterifying agent, and the kind of the acid catalyst was changed to that indicated in Table 4.

### (Example 17)

A solid product was obtained in the same method as in Example 2 except that the kind of the acid catalyst was changed to that indicated in Table 4.

### [Solubility]

For the solid products obtained in the examples and the like, solubility was evaluated by the following method. Firstly, 10 mg of the solid product was added to 0.7 mL of deuterated chloroform set at 25°C, and vibration was applied as necessary. The state of the solid product in the deuterated chloroform was visually observed, and the evaluation was performed according to the following criteria.
×; The solid product was not dissolved in the deuterated chloroform.
∘: Almost the entirety of the solid product was dissolved in the deuterated chloroform.
⊚: The entirety of the solid product was dissolved in the deuterated chloroform.

Also for the paramylon used as a raw material, solubility was evaluated by the above-described method. As a result, the paramylon was not dissolved in the deuterated chloroform (×).

### [Degree of substitution (DS value)]

The measurement sample prepared for the above-described evaluation of solubility was used to perform ¹H-NMR, and the degree of substitution (DS value) of the acyl group introduced through the esterification reaction was specified by the above-described method. In the ¹H-NMR, the NMR spectrum was obtained from the solid product having been dissolved in the deuterated chloroform. For the measurement samples (Comparative examples 1 to 4) for which the evaluation for solubility was ×, the solid product was not dissolved in the deuterated chloroform, so that the NMR spectrum was not obtained for the solid product. For the measurement samples (Reference example 3, Examples 1, 2, 4, 12 to 15, and 17) for which the evaluation for solubility was ∘, an amount of the solid product which was not dissolved in the deuterated chloroform was very small so that the result of the ¹H-NMR was not affected.

### [By-product]

The NMR spectrum obtained for the above-described evaluation for the DS value was used to evaluate an amount of a low molecular weight product (by-product) generated by the side reaction, by the following method. Firstly, according to the NMR spectrum, peaks derived from hydrogen atoms bonded to 2-position and 4-position carbon atoms of the glucose unit as the main product were specified. In the examples, these peaks appeared in a range of 4.50 to 5.00 ppm. The integral value of each of the specified peaks was calculated, and the total value V3 thereof was determined.

Furthermore, a peak derived from the by-product was specified from the NMR spectrum. In the examples, these peaks appeared in a range of 5.00 to 5.30 ppm. The total value V3 was assumed to be 1.00, and the integral value (total value of the integral values) V4 of the peak derived from the by-product at this time was determined. Based on the integral value V4, evaluation was performed according to the following criteria.
A: The integral value V4 was 0.15 or less.
B: The integral value V4 was more than 0.15 and 0.25 or less.
C: The integral value V4 was more than 0.25 and 0.5 or less.
D: The integral value V4 was more than 0.5 and 0.7 or less.
E: The integral value V4 was more than 0.7.

**[Table 2]**

| | | | | Comparative example | | | Reference example | | | Example | | |
|---|---|---|---|---|---|---|---|---|---|---|---|---|
| | | | | 1 | 2 | 3 | 1 | 2 | 3 | 1 | 2 | 3 |
| Molar equivalent (*1) | Polysaccharide | Cellulose | | | | | 1.0 | 1.0 | | | | |
| | | Paramylon (β-1,3-glucan) | | 1.0 | 1.0 | 1.0 | | | | 1.0 | 1.0 | 1.0 |
| | Monosaccharide | Glucose | | | | | | | 1.0 | | | |
| | Esterifying agent | Acetic anhydride | | 4.0 | 6.0 | 6.0 | 4.0 | 6.0 | 6.0 | 6.0 | 6.0 | 6.0 |
| | | Acetic acid | | 12.8 | | | 12.8 | | | | | |
| | Acid catalyst | Bronsted acid | Sulfuric acid | 0.02 | | | 0.02 | | | | | |
| | | Lewis acid | Sc(OTf)₃ | | 0.01 | 0.03 | | 0.03 | 0.03 | 0.03 | 0.03 | 0.03 |
| Reaction condition | Reaction temperature (°C) | | | rt | rt | rt | rt | rt | rt | 50 | 70 | 90 |
| | Reaction time (h) | | | 5 | 24 | 5 | 5 | 5 | 5 | 5 | 5 | 5 |
| Evaluation result | Solubility | | | × | × | × | ⊚ | ⊚ | ○ | ○ | ○ | ⊚ |
| | Degree of substitution (DS value) | | | - | - | - | 2.51 | 300 | 3.00 | 300 | 3.00 | 300 |
| | By-product | | | - | - | - | A | A | A | A | B | D |
| | Outer appearance | | | - | - | - | white | white | white | white | light yellow | light yellow |

| | | | | | | | | | | | | |
|---|---|---|---|---|---|---|---|---|---|---|---|---|
| (*1) For the polysaccharide, the total substance amount of the glucose units was set as 1.0 molar equivalent. | | | | | | | | | | | | |

**[Table 3]**

| | | | | Example | | | | | | | |
|---|---|---|---|---|---|---|---|---|---|---|---|
| | | | | 4 | 5 | 6 | 7 | 8 | 9 | 10 | 11 |
| Molar equivalent (*1) | Polysaccharide | Paramylon (β-1,3-glucan) | | 1.0 | 1.0 | 1.0 | 1.0 | 1.0 | 1.0 | 1.0 | 1.0 |
| | Esterifying agent | Acetic anhydride | | 4.0 | 4.0 | 4.0 | 4.0 | 4.0 | 4.0 | 4.0 | 4.0 |
| | | Acetic acid | | 12.8 | 12.8 | 12.8 | 12.8 | 12.8 | 12.8 | 12.8 | 12.8 |
| | Acid catalyst | Bronsted acid | Sulfuric acid | 0.06 | 0.10 | 0.14 | 0.20 | 0.06 | 0.06 | 0.06 | 0.06 |
| Reaction condition | Reaction temperature (°C) | | | 70 | 70 | 70 | 70 | 70 | 70 | 70 | 70 |
| | Reaction time (h) | | | 1 | 1 | 1 | 1 | 2 | 3 | 4 | 5 |
| Evaluation result | Solubility | | | ○ | ⊚ | ⊚ | ⊚ | ⊚ | ⊚ | ⊚ | ⊚ |
| | Degree of substitution (DS value) | | | 300 | 3.00 | 3.00 | 3.00 | 3.00 | 300 | 300 | 300 |
| | By-product | | | A | A | B | B | A | B | B | B |
| | Outer appearance | | | white | white | white | white | white | white | white | white |

| | | | | | | | | | | | |
|---|---|---|---|---|---|---|---|---|---|---|---|
| (*1) For the polysaccharide, the total substance amount of the glucose units was set as 1.0 molar equivalent. | | | | | | | | | | | |

**[Table 4]**

| | | | | Example | | | Comp. example | Example | | Example |
|---|---|---|---|---|---|---|---|---|---|---|
| | | | | 12 | 13 | 14 | 4 | 15 | 16 | 17 |
| Molar equivalent (*1) | Polysaccharide | Paramylon (β-1,3-glucan) | | 1.0 | 1.0 | 1.0 | 1.0 | 1.0 | 1.0 | 1.0 |
| | Esterifying agent | Acetic anhydride | | 6.0 | 6.0 | 6.0 | | | | 6.0 |
| | | Propionic anhydride | | | | | 6.0 | 6.0 | 6.0 | |
| | Acid catalyst | Lewis acid | Sc(OTf)₃ | | | | 0.01 | 0.03 | | |
| | | | Hf(OTf)₄ | 0.03 | | | | | | |
| | | | Cu(OTf)₂ | | 0.03 | | | | 0.03 | |
| | | | Zn(OTf)₂ | | | 0.03 | | | | |
| | | | Sc(NTf)₃ | | | | | | | 0.03 |
| Reaction condition | Reaction temperature (°C) | | | 50 | 70 | 70 | rt | 70 | 70 | 70 |
| | Reaction time (h) | | | 5 | 5 | 5 | 24 | 5 | 5 | 5 |
| Evaluation result | Solubility | | | ○ | ○ | ○ | × | ○ | ⊚ | ○ |
| | Degree of substitution (DS value) | | | 3.00 | 3.00 | 300 | - | 3.00 | 3.00 | 300 |
| | By-product | | | C | B | A | - | B | C | A |
| | Outer appearance | | | light yellow | light yellow | white | - | light yellow | light yellow | white |

| | | | | | | | | | | |
|---|---|---|---|---|---|---|---|---|---|---|
| (*1) For the polysaccharide, the total substance amount of the glucose units was set as 1.0 molar equivalent. | | | | | | | | | | |

As indicated in Tables 2 to 4, in the examples in which the esterification reaction was performed at a temperature of 40°C to 120°C in the presence of the acid catalyst, the β-1,3-glucan derivative was obtained with the high degree of substitution. The results of the examples indicate that the production method of the present embodiment is suitable for reducing a load on the environment since the number of kinds and an amount of the compounds used for the esterification reaction and the purifying process are smaller than those in conventional art.

According to the above-described evaluation results of solubility and the like, it is assumed that the esterification reaction hardly progressed in Comparative examples 1 to 4. The results of Comparative examples 1 to 4 indicate that, even in a case where an acid catalyst is used, if the reaction temperature is lower than 40°C, the esterification reaction hardly progresses. According to Reference examples 1 to 3, even in a reaction condition in which the esterification reaction hardly progressed for β-1,3-glucan, the esterification reaction progressed by using cellulose or glucose instead of β-1,3-glucan. This result indicates that β-1,3-glucan has poor reactivity in the esterification reaction as compared with cellulose and glucose. In general, in a case where the reaction condition for cellulose or glucose is applied to β-1,3-glucan as it is, the reaction of the β-1,3-glucan is unlikely to progress.

The results of Examples 1 to 11 indicate that a ratio of a substance amount of the acid catalyst to the total substance amount of the glucose units included in the β-1,3-glucan, the reaction temperature, and the reaction time affect an amount of by-products. Furthermore, the results of Examples 12 to 17 indicate that various acid catalysts and esterifying agents can be used for the esterification reaction of the present embodiment.

### INDUSTRIAL APPLICABILITY

The β-1,3-glucan derivative obtained by the production method of the present embodiment can be used for various usages, for example, used for adhesives, films, etc.

## Claims

1. A production method for a β-1,3-glucan derivative, the production method comprising performing an esterification reaction of β-1,3-glucan at a temperature of 40°C to 120°C in the presence of an acid catalyst.

2. The production method according to claim 1, wherein the esterification reaction is performed by bringing the β-1,3-glucan into contact with acid anhydride.

3. The production method according to claim 2, wherein the acid anhydride includes at least one selected from the group consisting of acetic anhydride and propionic anhydride.

4. The production method according to claim 1, wherein a ratio of a substance amount of the acid catalyst to a total substance amount of glucose units included in the β-1,3-glucan is 0.03 to 0.30.

5. The production method according to claim 1, wherein the esterification reaction is performed such that a degree of substitution (DS value) is 2.5 or more.

6. The production method according to claim 1, wherein the acid catalyst includes at least one selected from the group consisting of Bronsted acid and Lewis acid.

7. The production method according to claim 6, wherein the Bronsted acid includes sulfuric acid.

8. The production method according to claim 6, wherein the Lewis acid includes a metal complex having a metal element and a ligand coordinated to the metal element.

9. The production method according to claim 8, wherein the metal element has an electronegativity of 1.25 or more.

10. The production method according to claim 8, wherein the metal element in 6-coordination has an ionic radius of 80 pm or less.

11. The production method according to claim 8, wherein the metal element includes at least one selected from the group consisting of Sc, Hf, Cu, Zn, and In.

12. The production method according to claim 8, wherein an acid dissociation constant pKa of the ligand which has yet to be ionized is 0 or less.

13. The production method according to claim 8, wherein the ligand includes at least one selected from the group consisting of triflate, a bis(fluorosulfonyl)imide anion, and a bis(trifluoromethanesulfonyl)imide anion.
